## Europäisches Patentamt
## European Patent Office
## Office européen des brevets

(11) Publication number: **0 089 435**
**B1**

(12) **EUROPEAN PATENT SPECIFICATION**

(45) Date of publication of patent specification: **11.11.87**

(51) Int. Cl.⁴: **B 32 B 15/08, C 08 K 3/04**

(21) Application number: **82304678.4**

(22) Date of filing: **07.09.82**

(54) **Spot-weldable lightweight composite material.**

(30) Priority: **18.03.82 JP 43207/82**

(43) Date of publication of application:
**28.09.83 Bulletin 83/39**

(45) Publication of the grant of the patent:
**11.11.87 Bulletin 87/46**

(84) Designated Contracting States:
**DE FR GB**

(56) References cited:
**FR-A-1 597 713**
**FR-A-2 005 365**
**GB-A-1 022 167**

(73) Proprietor: **KAWASAKI STEEL CORPORATION**
**No. 1-28, 1-Chome Kitahonmachi-Dori**
**Chuo-Ku, Kobe-Shi Hyogo 651 (JP)**

(72) Inventor: **Matsumoto, Yoshihiro**
**377-19, Kawado-Cho**
**Chiba City (JP)**
Inventor: **Shinozaki, Masatoshi**
**81-5, Shibuya**
**Mobara City (JP)**
Inventor: **Irie, Toshio**
**3-6, Oguradai 2-Chome**
**Chiba City (JP)**

(74) Representative: **Overbury, Richard Douglas et al**
**HASELTINE LAKE & CO Hazlitt House 28**
**Southampton Buildings Chancery Lane**
**London WC2A 1AT (GB)**

## Description

The present invention relates to a spot-weldable lightweight composite material, and particularly relates to a spot-weldable lightweight composite material having excellent bending rigidity.

Automobiles having a lightweight body have been proposed in order to decrease fuel consumption. In order to decrease the weight of the car, the car body may be made smaller in size, the front engine-front wheel driving system may be used, the thickness of the sheet steel of the body may be decreased by using high tensile steel sheet, and a weight-saving material may be used for the body. However, when high tensile steel sheet is used in portions, for example the roof and the like, which are required to have rigidity, the sheet thickness cannot be decreased, and such portions have not yet been made of light weight material.

The use of composite material i.e. so-called laminate steel sheet, which consists of two steel sheets and an intermediate resin layer which conventionally has a thickness larger than the sum of the thicknesses of the steel sheets, can greatly decrease the body weight without decreasing rigidity. Composite material was disclosed by General Motors Corp. and National Steel Co. in a Meeting of SAE, held in Detroit in U.S.A. in February, 1980, and created a sensation. Although the use of a large amount of such material can be expected, the resin, that is an organic polymer material, used in the intermediate layer of the laminated steel sheet, is a good insulating material, and therefore laminated steel sheet has a serious drawback in that it cannot be subjected to spot welding, which hitherto has been an indispensable requirement of the material for automobiles. In order to obviate this drawback, fastening by bolts, adhesion by adhesive and other various particular methods have been proposed when using laminate steel sheet. However, the problem has not yet been completely solved.

Composite materials consisting of two metal sheets and a resin held between the metal sheets have hitherto been known not only as weight-saving materials but also as composite type vibration-damping steel sheets which absorb vibration energy by utilizing the viscoelasticity of the resin. A method of giving spot weldability to composite type vibration-damping steel sheet is disclosed in Japanese Patent Laid-Open Application No. 128,687/78, wherein the resin is mixed with electroconductive material, more particularly metal powders, such as iron powders and the like.

However, the laminated steel sheet to be used for weight saving conventionally has a very thick intermediate layer in contrast to vibration-damping steel sheet, and therefore even when metal powder is contained in the intermediate layer, it is very difficult to impart spot weldability to laminated steel sheet to be used for weight saving.

The object of the present invention is to provide a spot-weldable lightweight composite material free from the above described problems.

According to the present invention there is provided a lightweight composite material which consists of two metal sheets and an intermediate layer between the sheets wherein the layer comprises a mixture of a resin and electroconductive particles and has a thickness which is not less than the sum of the thicknesses of the two metal sheets characterised in that the electroconductive particles are graphite particles having a particle size distribution which satisfies the following relationship

$$\sqrt{R} \times V \geqq 240$$

wherein R represents the graphite content and is from 10 to 50% by weight and V represents the volume percentage of graphite particles, based on the total amount of graphite, which have a size within a range extending from 1/2 of the thickness of the intermediate layer up to the thickness of the intermediate layer whereby the composite material is spot-weldable.

For a better understanding of the invention and to show how the same may be carried into effect, reference will now be made, by way of example, to the accompanying drawings, wherein:

Figure 1 is a graph of welding current against the graphite content R of the intermediate layer and illustrates the influence of these upon spot weldability;

Figure 2 is a graph of graphite content R in the intermediate layer against the particle size distribution of the graphite and illustrates the influence of these upon spot weldability; and

Figure 3 is a cross-sectional view through a composite material illustrating a method of measuring the bending rigidity.

The inventors have made various investigations and found out that, even in the case where a laminated steel sheet has an intermediate layer having a thickness of 0.4—0.6 mm or more, when the particle size distribution and the amount of graphite particles to be compounded with the resin are properly selected, and the mixture of graphite particles and resin is treated under a condition not to cause secondary aggregation of the graphite particles in the intermediate layer, and the graphite particles are uniformly distributed in the intermediate layer, spot welding of the resultant laminated steel sheet can be carried out. The present invention is based on this discovery.

In the present invention, the intermediate layer held between the two metal sheets is formed of resin and graphite. The intermediate layer has a thickness not less than the sum of the thicknesses of the two metal sheets because this results in a greater saving in weight of the resultant composite material and this object is different to the object involved when producing composite type vibration-damping steel sheets.

**0 089 435**

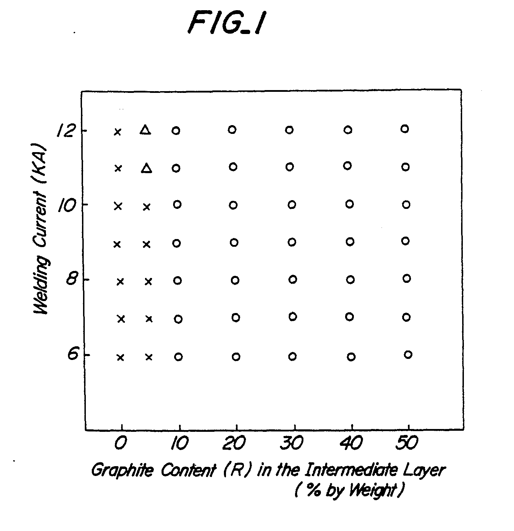

An explanation will be made hereinafter with respect to a basic experiment relating to the graphite content in the intermediate layer and the particle size distribution of the graphite, which has been carried out in order to impart spot weldability to the resulting composite material. Graphite powders, whose particle size had been adjusted such that particles having a size of from 0.3 mm (50 meshes) to 0.6 mm occupy 80% of the total volume of the graphite powder, were subjected to a treatment for preventing secondary aggregation. Then intermediate layers having a thickness of 0.6 mm and having different contents of graphite powder over the range of from 0 to 50% by weight were formed. Each intermediate layer was held between two cold rolled steel sheets, each having a thickness of 0.2 mm, and the resulting mass was pressed at elevated temperature to adhere the intermediate layer to the steel sheets. The spot weldability of the resulting laminated steel sheets (which had a total thickness of 1.0 mm) to cold rolled steel sheets having a thickness of 1.0 mm was investigated by varying the welding electric current value under conditions such that the electrode force was 225 kg and the weld time was 10 cycles of an AC current having a frequency of 50 cycles. The results obtained are shown in Figure 1. In Figure 1, the mark "○" indicates that all parts of the laminated steel sheets could be spot welded; the mark "Δ" indicates that some parts of the sheets could be spot welded; and the mark "×" indicates that the sheets could not be spot welded at all. It can be seen from Figure 1 that, when the intermediate layer consists of resin having a graphite content of less than 10%, the laminated steel sheet could not be properly spot welded by any electric current values; and that when the intermediate layer had a graphite content of not less than 10% by weight, the sheet could be spot welded by any of the electric current values used in the test. However, when the intermediate layer has a graphite content of more than 50% by weight, the layer no longer has the softness and viscoelasticity peculiar to resins, and the intermediate layer itself cannot be formed.

The above described laminated steel sheets having a total thickness of 1.0 mm and having an intermediate layer containing from 10—50% by weight of graphite particles whose particle size distribution had been adjusted, could be spot welded, in spite of the fact that the intermediate layer had a thickness as large as 60% based on the total thickness of the laminated steel sheet under conditions such that the electrode force was 225 kg, the weld time was 10 cycles of an AC current having a frequency of 50 cycles, and the welding current was 8.8 kA. These conditions correspond to the A class condition relating to spot welding between steel sheets of 1.0 mm thickness recommended by the Resistance Welding Manufacturer's Association (RWMA). Based on the above described observations, the graphite content R in the intermediate layer is limited to 10—50% by weight in accordance with the invention.

When graphite having a particle size larger than the thickness of the intermediate layer is used, the thickness of the intermediate layer is dependent upon the particle size, and therefore any desired thickness for the intermediate layer cannot be obtained. Therefore, the particle size of the graphite must be no greater than the thickness of the intermediate layer. However, if graphite particles having a size smaller than 1/2 of the thickness of the intermediate layer are used, the particles are completely sealed from surrounding particles by resin, and therefore the electric conductivity necessary for welding cannot be obtained. Accordingly, the graphite to be contained in the intermediate layer must contain not less than a certain amount of particles having a size not smaller than 1/2 of the thickness of the layer.

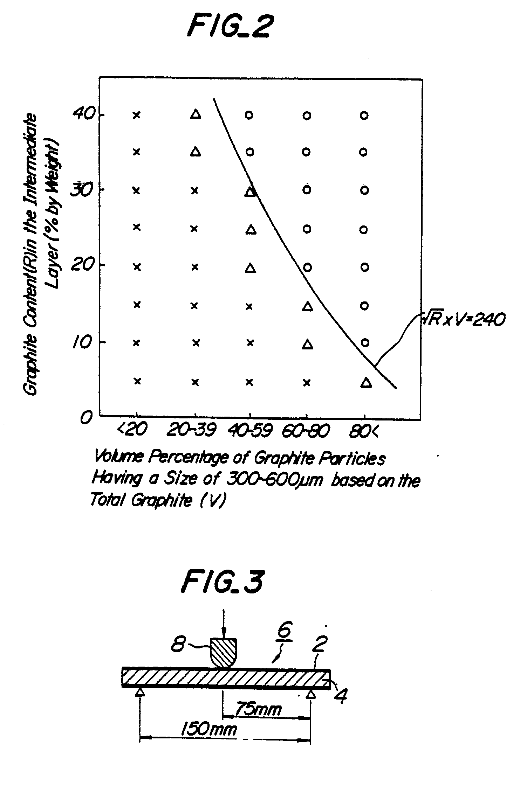

The inventors have carried out the following experiment relating to the influence of the particle size distribution of the graphite upon the spot weldability of the resulting laminated steel sheet in order to determine the proportion of graphite particles which should have a size not smaller than 1/2 of the thickness of the intermediate layer, based on the total amount of graphite. Graphite containing particles having a size of from 300 to 600 μm in various volume percentages based on the total amount of graphite was subjected to a treatment for preventing secondary aggregation. Then intermediate layers having a thickness of 0.6 mm and having various graphite contents R were formed and each layer was then held between two cold rolled steel sheets. In each case the resulting mass was pressed at elevated temperature to adhere the intermediate layer to the steel sheets. The weldability of the resulting laminated steel sheets (which had a total thickness of 1.0 mm) to cold rolled steel sheets having a thickness of 1.0 mm was investigated by carrying out spot welding of these steel sheets under conditions such that the electrode force was 225 kg, the weld time was 10 cycles of an AC current having a frequency of 50 cycles and the welding electric current was 8.8 kA. The results obtained are shown in Figure 2. In Figure 2 the mark "○" indicates that all parts of the laminated steel sheets could be spot welded; the mark "Δ" indicates that some parts of the sheets could be spot welded; and the mark "×" indicates that the sheets could not be spot welded at all, similarly to Figure 1.

It can be seen from Figure 2 that, when the relationship between the graphite content R (in % by weight) in the intermediate layer and the volume percentage V of graphite particles which have a size within the range of from 1/2 to 1 times the thickness of the intermediate layer (0.6 mm), (i.e. a size within the range from 300 to 600 μm) based on the volume of total graphite satisfies the formula $\sqrt{R} \times V \geq 240$ (that is, when the product of $\sqrt{R} \times V$ lies in the region not lower than the curved line shown in Figure 2), all of the resulting laminated steel sheets are able to be spot welded. As a consequence of the above described experiment, the relation between the graphite content R (in % by weight) in the intermediate layer and the volume percentage V of graphite having the above defined particle size to the volume of total graphite is limited, in accordance with the present invention, so as to satisfy the formula $\sqrt{R} \times V \geq 240$.

Even when there is used an intermediate layer formed of resin and graphite in amounts satisfying the above described condition but further mixed with a filler or the like which promotes the adhesion of the

3

layer to the metal sheets, the electroconductivity of the resulting intermediate layer does not deteriorate at all.

As the metal sheets used for holding the intermediate layer therebetween, there can preferably be used a cold rolled steel sheet which is inexpensive and has excellent surface properties and workability; a zinc-plated steel sheet having excellent corrosion resistance; and the like. However, in addition to the above described steel sheets, any metal sheets can be used provided they have not been subjected to a treatment, for example, vinyl coating, which impairs the electroconductivity. Accordingly, metal sheets can be freely selected depending upon the performance required of the resulting lightweight composite material.

As the treatment for preventing secondary aggregation of graphite, a particular method is not necessary. There can be used ordinarily and widely used methods, such as kneading the graphite together with a gelled resin; the use of a surfactant; and the like.

The following Example is given for the purpose of illustration of this invention and is not intended as a limitation thereof.

Example

Intermediate layers having three thicknesses (0.4, 0.6 and 0.8 mm) were produced in the following manner. Graphite was produced having such a particle size distribution that the volume percentage V, corresponding to the thickness of the intermediate layer in accordance with the present invention, was 80%. (This graphite satisfies the condition shown by the formula of $\sqrt{R} \times V \geqslant 240$). The graphite was subjected to a treatment for preventing secondary aggregation and then mixed with a thermoplastic resin, such as polypropylene, polyethylene, nylon or the like, in an amount such that the resulting mixture had a graphite content R of 30%. The mixture was then formed into intermediate layers having the above described three kinds of thicknesses. Each of the resulting intermediate layers was held between two cold rolled steel sheets having a thickness of 0.2, 0.3 or 0.4 mm, respectively, and the resulting mass in each case was pressed to adhere the intermediate layer to the steel sheets. The resulting laminated steel sheets were examined with respect to the weight ratio, bending rigidity and spot weldability. The obtained results are shown in the following Table 1. Sample No. 10 in Table 1 is a comparative steel sheet and is a unitary cold rolled steel sheet having a thickness of 0.8 mm. In Table 1, the weight ratio in total thickness is the relative weight of the sample steel sheet based on the weight, taken as 100, of the above described comparative steel sheet having a thickness of 0.8 mm (sample No. 10). The bending ridigity is measured by a method wherein the composite material 6 consisting of metal sheets 2 and an intermediate layer 4 is supported on both ends in the dimension shown in Figure 3, and a load is applied to the composite material at the center by means of a punch.

TABLE 1

| Sample No. | Thickness of intermediate layer (mm) | Thickness of steel sheet (mm) | Total thickness (mm) | Weight ratio in total thickness | Load at 1 mm deformation (kg) |
|---|---|---|---|---|---|
| 1 | 0.4 | 0.2 | 0.8 | 58 | 0.8 |
| 2 | 0.6 | 0.2 | 1.0 | 62 | 1.3 |
| 3 | | 0.3 | 1.2 | 87 | 2.8 |
| 4 | 0.8 | 0.2 | 1.2 | 67 | 1.9 |
| 5 | | 0.3 | 1.4 | 83 | 4.3 |
| 6 | | 0.4 | 1.6 | 117 | 6.5 |
| 7 | 0 | 0.8 | 0.8 | 100 | 0.9 |

Table 1 shows a comparison in weight and in deformation load (bending) between laminated steel sheets of the present invention (sample Nos. 1 to 6) and ordinary steel sheet having a thickness of 0.8 mm (sample No. 7). Weight and deformation load are important factors when considering whether to use laminated steel sheet in place of ordinary steel sheet. All the laminated steel sheets of sample Nos. 1 to 6 (which contain graphite particles in accordance with the present invention) were found to have excellent spot weldability. When the laminated steel sheet of sample No. 1 is compared with the ordinary steel sheet of sample No. 7, it is lighter in weight by as much as {(100–58)/100}×100=42% and is lower in deformation load by {(0.9–0.8)/0.9}×100=11%. Thus the laminated steel sheet of sample No. 1 can be used in place of the ordinary steel sheet of sample No. 7 for a member whose strength is not critical. Further, the laminated steel sheet of sample No. 2 is lighter in weight by {(100–62)/100}×100=38% than the comparative ordinary steel sheet of sample No. 7 and is higher in deformation load by {(1.3 kg–0.9 kg)/0.9 kg}×100=44% than the comparative ordinary steel sheet of sample No. 7. Accordingly when the ratio of steel and resin is properly selected, laminated steel sheets which are lighter in weight and concurrently higher in strength than ordinary steel sheets can be obtained.

As seen from the above described Example, in accordance with the present invention, a lightweight composite material capable of being spot welded can be obtained by adjusting the graphite content in the intermediate layer and the particle size distribution of the graphite contained in the layer. Therefore, the weight of automotive parts, which are required to have a high bending rigidity, can be decreased. Further, the laminated steel sheets of the present invention have excellent vibration-damping properties and heat insulating properties due to the use of resin in the intermediate layer, and can be expected to be used widely as a material for industrial machines and for architecture as well as for automobiles.

### Claim

A lightweight composite material which consists of two metal sheets and an intermediate layer between the sheets wherein the layer comprises a mixture of a resin and electroconductive particles and has a thickness which is not less than the sum of the thicknesses of the two metal sheets characterised in that the electroconductive particles are graphite particles having a particle size distribution which satisfies the following relationship

$$\sqrt{R} \times V \geq 240$$

wherein R represents the graphite content and is from 10 to 50% by weight and V represents the volume percentage of graphite particles, based on the total amount of graphite, which have a size within a range extending from 1/2 of the thickness of the intermediate layer up to the thickness of the intermediate layer whereby the composite material is spot-weldable.

### Patentanspruch

Leichtes Verbundmaterial bestehend aus zwei Metallblechen und einer zwischen diesen liegenden Zwischenschicht, wobei die Zwischenschicht eine Mischung aus einem Harz und elektrisch leitfähigen Teilchen beinhaltet und eine Dicke hat, die nicht kleiner ist als die Summe der Dicken der beiden Metallbleche, dadurch gekennzeichnet, daß die elektrisch leitfähigen Teilchen Graphitteilchen sind, die eine Teilchengrößenverteilung haben, die die Bedingung

$$\sqrt{R} \times V \geq 240$$

erfüllt, wobei R den Graphitgehalt repräsentiert und 10 bis 50 Gewichtsprozent beträgt und V den auf der gesamten Graphitmenge basierenden prozentualen Volumenanteil der Graphitteilchen repräsentiert, die eine im Bereich von der halben Dicke bis zur ganzen Dicke der Zwischenschicht liegende Größe haben, wodurch das Verbundmaterial punktschweißbar ist.

### Revendication

Matériau composite léger qui est constitué de deux feuilles métalliques et d'une couche intermédiaire entre les feuilles, dans lequel la couche comporte un mélange d'une résine et de particules électroconductrices, et a une épaisseur qui n'est pas inférieure à la somme des épaisseurs des deux feuilles métalliques, caractérisé en ce que les particules électroconductrices sont des particules de graphite ayant une distribution de tailles de particules qui satisfait la relation suivante:

$$\sqrt{R} \times V \geq 240,$$

dans laquelle R représente la teneur en graphite et est compris entre 10% et 50% en poids, et V représente le pourcentage en volume, dans la quantité totale de graphite, des particules de graphite, qui ont une grosseur comprise entre la moitié de l'épaisseur de la couche intermédiaire et l'épaisseur de la couche intermédiaire, de sorte que le matériau composite est soudable par point.

0 089 435

# FIG_1

Welding Current (KA)

Graphite Content (R) in the Intermediate Layer
( % by Weight )

## FIG_2

Y-axis: Graphite Content(R)in the Intermediate Layer (% by Weight)

$\sqrt{R} \times V = 240$

X-axis: <20    20-39    40-59    60-80    80<

Volume Percentage of Graphite Particles Having a Size of 300-600μm based on the Total Graphite (V)

## FIG_3

8    6    2
75mm
150mm
4